# FASCICULE DE BREVET EUROPEEN

(11) **EP 3 310 217 B1**
(45) Date de publication et mention de la délivrance du brevet: **11.12.2019**
(21) Numéro de dépôt: 16738482.5
(22) Date de dépôt: 13.06.2016
(51) Int. Cl.: A47J 27/04

(54) **ACCESSOIRE CUISEUR VAPEUR POUR CHAUFFER ET/OU CUIRE À LA VAPEUR DES ALIMENTS CONTENUS DANS UN RÉCIPIENT**
DAMPFGARERZUBEHÖR ZUM DAMPFERHITZEN UND/ODER -GAREN VON LEBENSMITTELN IN EINEM BEHÄLTER
STEAM COOKER ACCESSORY FOR STEAM HEATING AND/OR COOKING FOODS CONTAINED IN A CONTAINER

(30) Priorité: 16.06.2015 FR 1555516; 31.05.2016 FR 1654921
(43) Date de publication de la demande: 25.04.2018
(73) Titulaire: SEB S.A., 69130 Ecully (FR)
(72) Inventeur: GUEGAN, Laurent, 74150 Lornay (FR); BLOND, Laurent, 21200 Beaune (FR)
(74) Mandataire: Bourrières, Patrice
(86) Numéro de dépôt international: PCT/FR2016/051431
(87) Numéro de publication internationale: WO 2016/203144

(56) Documents cités:
- FR-A1- 2 614 976
- US-A- 2 786 932
- US-B1- 6 530 308

## Description

La présente invention concerne le domaine technique des appareils et dispositifs de production de vapeur pour chauffer et/ou cuire des aliments à la vapeur.

La présente invention concerne plus particulièrement les accessoires cuiseur vapeur pour chauffer et/ou cuire à la vapeur des aliments contenus dans un récipient.

La présente invention concerne également les appareils pour chauffer et/ou cuire à la vapeur des aliments, comportant un récipient associé à un dispositif de production de vapeur formant un tel accessoire cuiseur vapeur.

Il est connu du document US 2014/0103023 un appareil comportant un accessoire de production de vapeur utilisé pour chauffer et/ou cuire à la vapeur des aliments contenus dans un récipient. Cet accessoire de production de vapeur comprend un générateur de vapeur comportant une chambre de production de vapeur et un réservoir d'eau alimentant en eau la chambre de production de vapeur. La chambre de production de vapeur est reliée à des sorties de distribution de vapeur ménagées dans une partie inférieure du générateur de vapeur au dessus du récipient.

Un inconvénient de cet appareil réside dans le remplissage du réservoir d'eau du générateur de vapeur, qui doit être effectué avec précaution du fait de la présence du générateur de vapeur.

Le document US-A-6530308 décrit un accessoire cuiseur vapeur selon le préambule de la revendication indépendante 1.

Un objet de la présente invention est de proposer un accessoire cuiseur vapeur utilisé avec un récipient pour chauffer et/ou cuire des aliments à la vapeur, dans lequel le remplissage du réservoir d'eau est facilité.

Un autre objet de la présente invention est de proposer un accessoire cuiseur vapeur utilisé avec un récipient pour chauffer et/ou cuire des aliments à la vapeur, qui présente une construction économique.

Un autre objet de la présente invention est de proposer un accessoire cuiseur vapeur utilisé avec un récipient pour chauffer et/ou cuire des aliments à la vapeur, qui présente de bonnes performances de production de vapeur.

Un autre objet de la présente invention est de proposer un cuiseur vapeur électrique pour chauffer et/ou cuire des aliments à la vapeur comportant un récipient et un accessoire cuiseur vapeur, dans lequel le remplissage du réservoir d'eau est facilité.

Un autre objet de la présente invention est de proposer un cuiseur vapeur électrique pour chauffer et/ou cuire des aliments à la vapeur comportant un récipient et un accessoire cuiseur vapeur, qui présente une construction économique.

Un autre objet de la présente invention est de proposer un cuiseur vapeur électrique pour chauffer et/ou cuire des aliments à la vapeur comportant un récipient et un accessoire cuiseur vapeur, qui présente de bonnes performances de production de vapeur.

Ces objets sont atteints avec un accessoire cuiseur vapeur pour chauffer et/ou cuire à la vapeur des aliments contenus dans un récipient, l'accessoire cuiseur vapeur comprenant un générateur de vapeur comportant une chambre de production de vapeur, l'accessoire cuiseur vapeur comprenant un réservoir d'eau alimentant en eau la chambre de production de vapeur, la chambre de production de vapeur étant reliée à au moins une sortie de distribution de vapeur ménagée dans une partie inférieure du générateur de vapeur, du fait que le générateur de vapeur présente au moins un évent mettant en communication la partie inférieure du générateur de vapeur avec une partie extérieure du générateur de vapeur s'étendant au dessus de la partie inférieure. Cette disposition permet de mieux contrôler l'échappement de la vapeur hors du récipient fermé par le générateur de vapeur.

Avantageusement alors, le générateur de vapeur présente une surface d'appui annulaire inférieure. Cette disposition permet de poser le générateur de vapeur sur le bord supérieur d'un récipient.

Avantageusement alors, ledit au moins un évent est entouré par la surface d'appui annulaire inférieure. Cette disposition permet d'équilibrer la pression à l'intérieur du récipient fermé par le générateur de vapeur, tout en contrôlant l'échappement de vapeur hors du récipient fermé par le générateur de vapeur.

Avantageusement encore, le générateur de vapeur présente une paroi latérale extérieure et la chambre de production de vapeur est agencée dans le générateur de vapeur à distance de la paroi latérale extérieure. Ces dispositions permettent de limiter la température de la paroi latérale extérieure du générateur de vapeur.

Avantageusement alors, ledit au moins un évent débouche dans la paroi latérale extérieure. Cette disposition permet d'augmenter la taille de la zone de réception du réservoir d'eau amovible.

Avantageusement encore, le générateur de vapeur présente une paroi inférieure dans laquelle est formée ladite au moins une sortie de distribution de vapeur, et la chambre de production de vapeur est agencée dans le générateur de vapeur à distance de la paroi inférieure. Ces dispositions permettent de réaliser une chambre de distribution de vapeur sous la chambre de production de vapeur, ce qui permet plus de liberté dans l'agencement des sorties de distribution de vapeur.

Ces objets sont également atteints avec un cuiseur vapeur électrique comportant un récipient pour contenir les aliments à chauffer et/ou à cuire, et un couvercle présentant une face inférieure prévue pour être disposée sur le récipient, du fait que le couvercle comprend un accessoire cuiseur vapeur selon l'une au moins des caractéristiques précitées.

L'invention sera mieux comprise à l'étude de deux exemples de réalisation, pris à titre nullement limitatif, illustrés dans les figures 1 à 4 annexées, dans lesquelles :
- la figure 1 annexée est une vue schématique en élévation et en coupe d'un premier exemple de réalisation d'un cuiseur vapeur électrique comportant un accessoire cuiseur vapeur selon l'invention,
- la figure 2 est une vue en perspective éclatée et en coupe d'un deuxième exemple de réalisation d'un cuiseur vapeur électrique comportant un accessoire cuiseur vapeur selon l'invention,
- la figure 3 est une vue en perspective et en coupe de l'accessoire cuiseur vapeur illustré sur la figure 1, selon une autre orientation,
- la figure 4 est une vue en perspective et en coupe de l'accessoire cuiseur vapeur illustré sur les figures 2 et 3, selon une autre section de coupe.

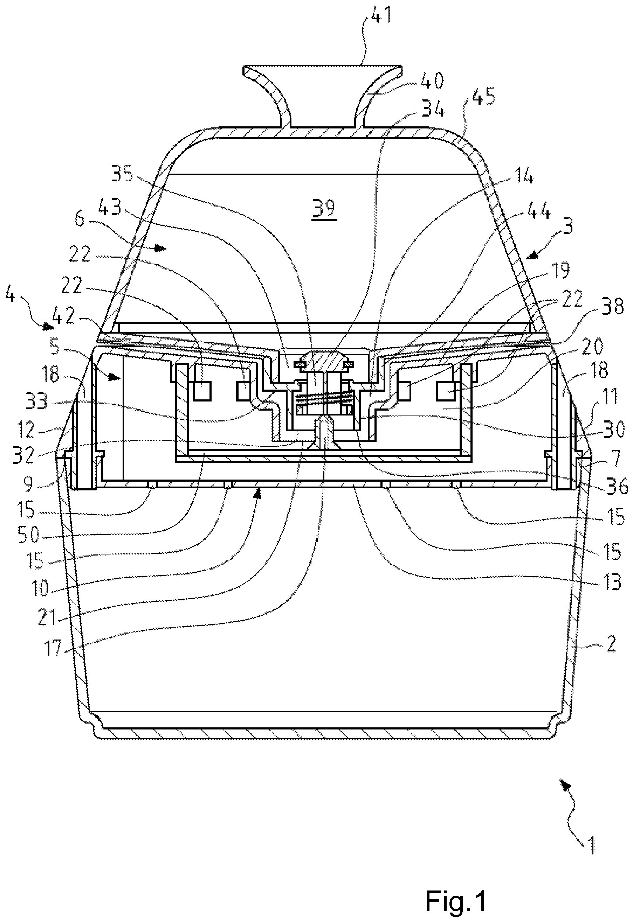

Le cuiseur vapeur électrique 1 illustré de manière schématique sur la figure 1 est un appareil pour chauffer et/ou cuire à la vapeur des aliments, comportant un récipient 2 pour contenir les aliments à chauffer et/ou à cuire, et un couvercle 3 prévu pour reposer sur le récipient 2. A cet effet, le couvercle 3 présente une face inférieure 7 prévue pour être disposée sur le récipient 2.

Le couvercle 3 comprend un accessoire cuiseur vapeur 4 pour chauffer et/ou cuire à la vapeur des aliments contenus dans le récipient 2.

Plus particulièrement dans l'exemple de réalisation illustré sur la figure 1, le couvercle 3 forme un accessoire cuiseur vapeur 4 pour chauffer et/ou cuire à la vapeur des aliments contenus dans le récipient 2. A titre de variante, le couvercle 3 peut notamment comporter un dispositif de support, si désiré amovible, prévu pour porter l'accessoire cuiseur vapeur 4, et pour reposer sur le récipient 2.

L'accessoire cuiseur vapeur 4 comprend un générateur de vapeur 5 et un réservoir d'eau 6. Le réservoir d'eau 6 est amovible par rapport au générateur de vapeur 5 et le générateur de vapeur 5 porte le réservoir d'eau 6 amovible. Le générateur de vapeur 5 comporte une entrée d'admission d'eau 14 alimentée en eau par le réservoir d'eau 6 disposé sur le générateur de vapeur 5. Le générateur de vapeur 5 comporte une chambre de production de vapeur 20. Le réservoir d'eau 6 alimente en eau la chambre de production de vapeur 20. A cet effet la chambre de production de vapeur 20 présente une entrée d'alimentation en eau 21 alimentée en eau par le réservoir d'eau 6 disposé sur le générateur de vapeur 5. La chambre de production de vapeur 20 comporte un dispositif de chauffe 50 pour transformer en vapeur l'eau présente dans la chambre de production de vapeur 20. La chambre de production de vapeur 20 présente au moins une sortie d'évacuation de vapeur 22. La chambre de production de vapeur 20 est reliée à au moins une sortie de distribution de vapeur 15 ménagée dans une partie inférieure 10 du générateur de vapeur 5.

Plus particulièrement, le générateur de vapeur 5 présente une surface d'appui annulaire inférieure 9 prévue pour reposer sur le récipient 2. L'entrée d'admission d'eau 14 du générateur de vapeur 5 est agencée dans une face supérieure 19 du générateur de vapeur 5. L'entrée d'admission d'eau 14 forme un entonnoir. L'entrée d'admission d'eau 14 débouche dans l'entrée d'alimentation en eau 21 de la chambre de production de vapeur 20. Le générateur de vapeur 5 présente une paroi inférieure 13 dans laquelle est formée ladite au moins une sortie de distribution de vapeur 15. Le générateur de vapeur 5 présente au moins un évent 18 mettant en communication la partie inférieure 10 du générateur de vapeur 5 avec une partie extérieure 11 du générateur de vapeur 5 s'étendant au dessus de la partie inférieure 10. Ledit au moins un évent 18 est entouré par la surface d'appui annulaire inférieure 9. Le générateur de vapeur 5 présente une paroi latérale extérieure 12 s'étendant en dessous du réservoir d'eau 6 disposé sur le générateur de vapeur 5. Ledit au moins un évent 18 débouche dans la paroi latérale extérieure 12.

Dans l'exemple de réalisation illustré sur la figure 1, le dispositif de chauffe 50 est agencé dans le fond de la chambre de production de vapeur 20. Le dispositif de chauffe 50 peut notamment comporter un élément chauffant sérigraphié, ou un élément chauffant blindé disposé sous une plaque de diffusion de chaleur et/ou dans une plaque de diffusion de chaleur. A titre de variante, le dispositif de chauffe 50 pourrait notamment être agencé à l'intérieur de la chambre de production de vapeur 20.

Selon une forme de réalisation préférée, la chambre de production de vapeur 20 présente au moins une sortie d'évacuation de vapeur 22 disposée plus haut que l'entrée d'alimentation en eau 21, ladite au moins une sortie d'évacuation de vapeur 22 communiquant avec ladite au moins une sortie de distribution de vapeur 15.

Dans l'exemple de réalisation illustré sur la figure 1, la chambre de production de vapeur 20 présente plusieurs sorties d'évacuation de vapeur 22 disposées plus haut que l'entrée d'alimentation en eau 21 et communiquant avec les sorties de distribution de vapeur 15. La chambre de production de vapeur 20 est agencée dans le générateur de vapeur 5 à distance de la paroi inférieure 13, ce qui permet une plus grande liberté dans la position des sorties de distribution de vapeur 15. La chambre de production de vapeur 20 est agencée dans le générateur de vapeur 5 à distance de la paroi latérale extérieure 12.

Dans l'exemple de réalisation illustré sur la figure 1, le générateur de vapeur 5 présente plusieurs évents 18 mettant en communication la partie inférieure 10 du générateur de vapeur 5 avec la partie extérieure 11 du générateur de vapeur 5. La partie inférieure 10 forme la paroi inférieure 13. La partie extérieure 11 forme la paroi latérale extérieure 12.

Le réservoir d'eau 6 comporte une sortie d'écoulement 32 alimentant en eau le générateur de vapeur 5.

Dans l'exemple de réalisation illustré sur la figure 1, l'accessoire cuiseur vapeur 4 comporte au moins un passage d'air 38 mettant en communication la sortie d'écoulement 32 avec l'extérieur lorsque le réservoir d'eau 6 est disposé sur le générateur de vapeur 5. Tel que bien visible sur la figure 1, ledit au moins un passage d'air 38 est ménagé entre le réservoir d'eau 6 et le générateur de vapeur 5, plus particulièrement entre la face inférieure 33 du réservoir d'eau 6 et la face supérieure 19 du générateur de vapeur 5. Le réservoir d'eau 6 et/ou le générateur de vapeur 5 peuvent présenter à cet effet des entretoises (non représentées sur la figure 1) pour écarter la face inférieure 33 du réservoir d'eau 6 de la face supérieure 19 du générateur de vapeur 5. A titre de variante, ledit au moins un passage d'air 38 peut notamment être ménagé dans le réservoir d'eau 6 et/ou dans le générateur de vapeur 5.

Dans l'exemple de réalisation illustré sur la figure 1, la sortie d'écoulement 32 est agencée dans une face inférieure 33 du réservoir d'eau 6. La partie inférieure du réservoir d'eau 6 repose sur la partie supérieure du générateur de vapeur 5.

Plus particulièrement, la sortie d'écoulement 32 s'étend au dessus de l'entrée d'alimentation en eau 21 de la chambre de production de vapeur 20. La sortie d'écoulement 32 présente un clapet 34 mobile entre une position d'obturation dans laquelle la sortie d'écoulement 32 est obturée et une position d'écoulement dans laquelle la sortie d'écoulement 32 autorise l'écoulement de l'eau hors du réservoir d'eau 6. De préférence, le réservoir d'eau 6 comporte au moins une surface d'appui 36 s'étendant en dessous du clapet 34 disposé en position d'obturation, pour prévenir les actionnements intempestifs du clapet 34. Selon une forme de réalisation préférée, le clapet 34 est entouré par un conduit 30 s'étendant en dessous du clapet 34 disposé en position d'obturation.

Dans l'exemple de réalisation illustré sur la figure 1, le générateur de vapeur 5 présente un ergot 17 repoussant le clapet 34 vers la position d'écoulement lorsque le réservoir d'eau 6 est disposé sur le générateur de vapeur 5. Tel que visible sur la figure 1, l'ergot 17 est agencé dans la chambre de production de vapeur 20. Le clapet 34 est mobile selon une direction principalement verticale. Le clapet 34 est repoussé vers la position d'obturation par un élément de rappel élastique 35. L'élément de rappel élastique 35 est avantageusement formé par un ressort hélicoïdal. La surface d'appui 36 est formée par la sortie d'écoulement 32. A titre de variante, le clapet 34 peut présenter un ergot repoussé par la chambre de production de vapeur 20 lorsque le réservoir d'eau 6 est disposé sur le générateur de vapeur 5.

Selon une forme de réalisation préférée, le réservoir d'eau 6 peut être positionné sur le générateur de vapeur 5 selon plusieurs orientations angulaires. Dans l'exemple de réalisation illustré sur la figure 1, le réservoir d'eau 6 peut être positionné sur le générateur de vapeur 5 sans indexation particulière. Plus particulièrement, l'entrée d'admission d'eau 14 est agencée dans la partie centrale de la face supérieure 19 du générateur de vapeur 5.

Selon une forme de réalisation préférée, le réservoir d'eau 6 comporte un organe de préhension 40. Dans l'exemple de réalisation illustré sur la figure 1, l'organe de préhension 40 est agencé à l'opposé de la sortie d'écoulement 32. L'organe de préhension 40 présente une surface d'appui 41 prévue pour porter le réservoir d'eau 6 lorsque le réservoir d'eau 6 est disposé en position retournée.

Le réservoir d'eau 6 peut être réalisé en deux parties assemblées, si désiré démontables, notamment pour le remplissage et/ou pour le nettoyage. Dans l'exemple de réalisation illustré sur la figure 1, la face inférieure 33 du réservoir d'eau 6 est formée par une base 42 comportant un orifice 43 autour duquel est monté un bouchon 44 présentant la sortie d'écoulement 32. Le bouchon 44 loge le clapet 34. Un corps 45 est monté sur la base 42. L'organe de préhension 40 est issu du corps 45. Le corps 45 peut être assemblé de manière démontable ou non avec la base 42. A titre de variante, l'organe de préhension 40 peut notamment être issu de la base 42, ou être rapporté ou fixé sur le corps 45 ou sur la base 42. Le réservoir d'eau 6 peut comporter un orifice de remplissage distinct de la sortie d'écoulement 32. Si désiré, l'orifice de remplissage peut être obturé.

Le cuiseur vapeur électrique 1 et l'accessoire cuiseur vapeur 4 illustrés sur la figure 1 fonctionnent et s'utilisent de la manière suivante.

L'utilisateur remplit d'abord le réservoir d'eau 6, par exemple en retirant la base 42 du corps 45 après avoir retourné le réservoir d'eau 6. L'utilisateur replace ensuite la base 42 sur le corps 45 et retourne à nouveau le réservoir d'eau 6 pour positionner le réservoir d'eau 6 sur le générateur de vapeur 5. La sortie d'écoulement 32 du réservoir d'eau 6 s'étend alors dans l'entrée d'admission d'eau 14 du générateur de vapeur 5. Le clapet 34 est repoussé vers la position d'écoulement par le générateur de vapeur 5 lorsque le réservoir d'eau 6 est disposé sur le générateur de vapeur 5. L'ergot 17 s'étend alors à l'intérieur du conduit 30 et repousse le clapet 34 vers la position d'écoulement, de sorte que l'eau issue de la sortie d'écoulement 32 du réservoir d'eau 6 s'écoule dans l'entrée d'admission d'eau 14 du générateur de vapeur 5 pour atteindre la sortie d'écoulement 32 du réservoir d'eau 6. Le niveau d'eau monte dans la chambre de production de vapeur 20 jusqu'à atteindre la sortie d'écoulement 32. Le réservoir d'eau 6 disposé sur le générateur de vapeur 5 forme une chambre fermée 39 au dessus de la sortie d'écoulement 32. L'eau ne peut s'écouler hors du réservoir d'eau 6 que si de l'air prend sa place. A cet effet la sortie d'écoulement 32 communiquant avec l'extérieur de l'accessoire cuiseur vapeur 4 par le passage d'air 38 permet que de l'air rentre dans le réservoir d'eau 6, tant que le niveau de l'eau n'atteint pas la sortie d'écoulement 32.

L'utilisateur met alors en marche le dispositif de chauffe 50. La température de l'eau présente dans la chambre de production de vapeur s'élève jusqu'à ce que de la vapeur soit produite. La vapeur s'échappe alors par les sorties d'évacuation de vapeur 22 pour atteindre les sorties de distribution de vapeur 15 et se répandre dans le récipient 2 pour cuire ou chauffer les aliments présents dans le récipient 2. La production de vapeur entraîne une diminution du niveau de l'eau présente dans la chambre de production de vapeur 20 en dessous de la sortie d'écoulement 32, ce qui permet une réalimentation de la chambre de production de vapeur 20 en eau. L'eau peut alors s'écouler du réservoir d'eau 6 par la sortie d'écoulement 32, jusqu'à ce que le niveau de l'eau atteigne la sortie d'écoulement 32, de l'air provenant de l'extérieur de l'accessoire cuiseur vapeur 4 passant par le passage d'air 38 pour entrer par la sortie d'écoulement 32 dans le réservoir d'eau 6.

Le réservoir d'eau 6 alimente en eau la chambre de production de vapeur 20 par gravité. En d'autres termes, l'eau s'écoule du réservoir d'eau 6 pour alimenter la chambre de production de vapeur 20.

A titre de variante, le réservoir d'eau 6 ne comporte pas nécessairement un clapet 34. La sortie d'écoulement 32 du réservoir d'eau 6 peut notamment être calibrée pour que le débit d'eau entrant dans la chambre de production de vapeur 20 permette la vaporisation de l'eau présente dans la chambre de production de vapeur 20 sans que de l'eau ne déborde de la chambre de production de vapeur 20.

A titre de variante, l'entrée d'admission d'eau 14 et l'entrée d'alimentation en eau 21 peuvent être confondues.

A titre de variante, le réservoir d'eau 6 peut être verrouillé par baïonnette sur le générateur de vapeur 5. A cet effet le réservoir d'eau 5 peut par exemple comporter des pattes prévues pour un accrochage par rotation avec le générateur de vapeur, ou vice-versa.

A titre de variante, l'accessoire cuiseur vapeur 4 peut comporter une pompe pour contrôler l'écoulement de l'eau hors du réservoir d'eau 6 afin d'alimenter la chambre de production de vapeur 20. Pour simplifier les connexions électriques, la pompe peut être avantageusement disposée dans le générateur de vapeur 5.

Si désiré le générateur de vapeur 5 peut comporter un dispositif de support amovible par rapport à la chambre de production de vapeur 20, de sorte que la chambre de production de vapeur 20 repose sur ledit dispositif de support et que ledit dispositif de support présente au moins une portion de surface d'appui prévue pour reposer sur un récipient. Le dispositif de support peut notamment présenter une configuration annulaire ou une configuration en U. En alternative, le dispositif de support amovible peut notamment appartenir au couvercle 3.

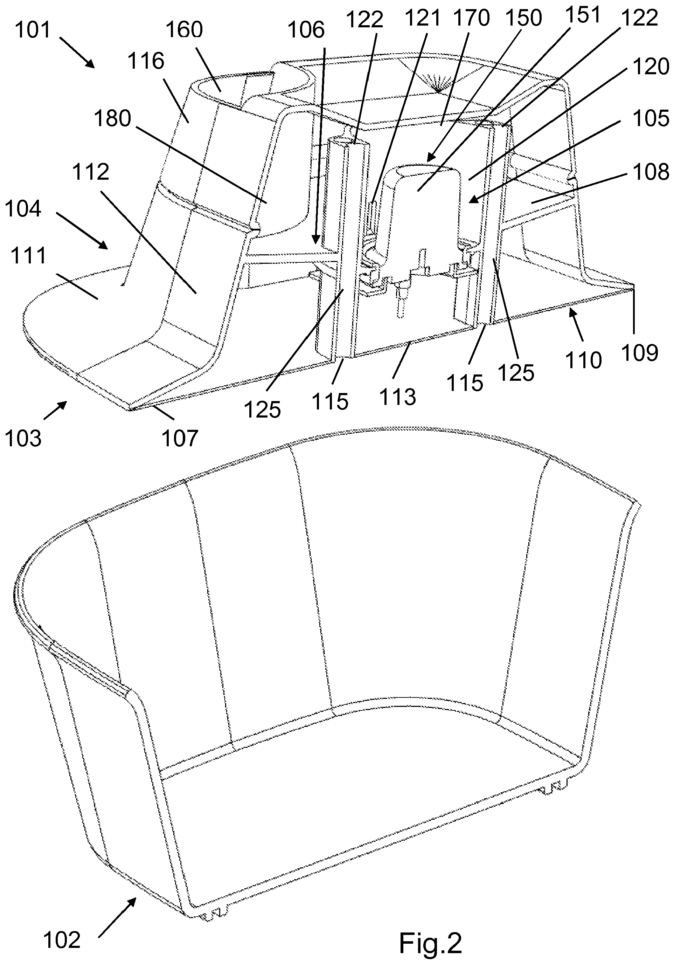

Le cuiseur vapeur électrique 101 illustré de manière schématique sur la figure 2 est un appareil pour chauffer et/ou cuire à la vapeur des aliments, comportant un récipient 102 pour contenir les aliments à chauffer et/ou à cuire, et un couvercle 103 prévu pour reposer sur le récipient 102. A cet effet, le couvercle 103 présente une face inférieure 107 prévue pour être disposée sur le récipient 102.

Le couvercle 103 comprend un accessoire cuiseur vapeur 104 pour chauffer et/ou cuire à la vapeur des aliments contenus dans le récipient 102.

Plus particulièrement dans l'exemple de réalisation illustré sur les figures 2 à 4, le couvercle 103 forme un accessoire cuiseur vapeur 104 pour chauffer et/ou cuire à la vapeur des aliments contenus dans le récipient 102. A titre de variante, le couvercle 103 peut notamment comporter un dispositif de support, si désiré amovible, prévu pour porter l'accessoire cuiseur vapeur 104, et pour reposer sur le récipient 102.

L'accessoire cuiseur vapeur 104 comprend un générateur de vapeur 105 et un réservoir d'eau 106. Le réservoir d'eau 106 communique avec l'extérieur par un orifice de remplissage 160. Si désiré, le réservoir d'eau 106 peut présenter au moins un autre orifice de remplissage.

Le générateur de vapeur 105 comporte une chambre de production de vapeur 120. Le réservoir d'eau 106 alimente en eau la chambre de production de vapeur 120 par gravité. A cet effet le réservoir d'eau 106 communique par une entrée d'alimentation en eau 121 avec la chambre de production de vapeur 120. Si désiré le réservoir d'eau 106 peut communiquer avec la chambre de production de vapeur 120 par au moins une autre entrée d'alimentation en eau.

De préférence, le réservoir d'eau 106 présente un fond 108 déversant vers l'entrée d'alimentation en eau 121.

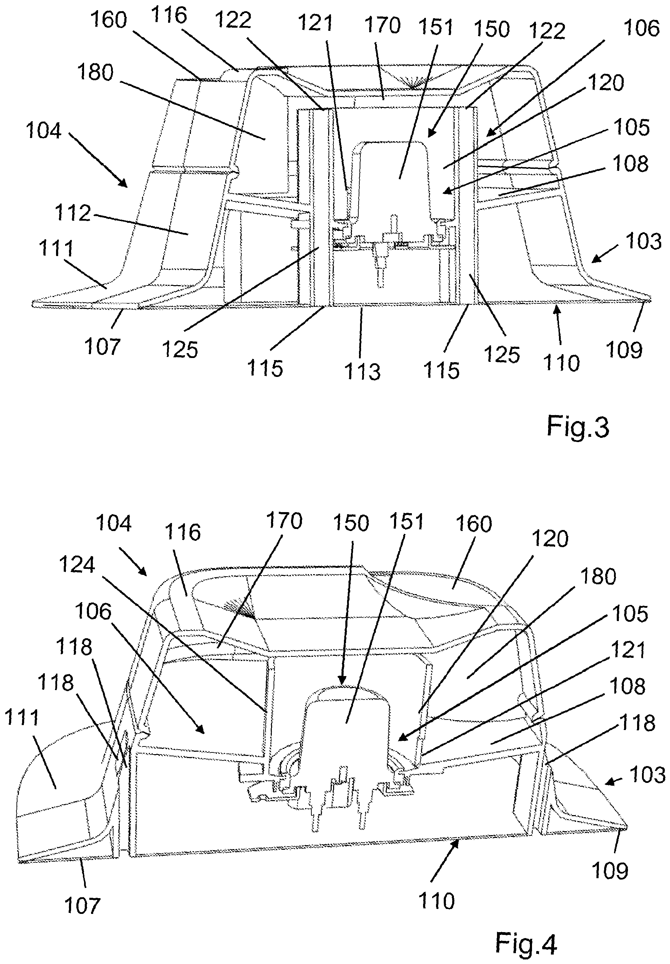

Dans l'exemple de réalisation illustré sur les figures 2 à 4, le réservoir d'eau 106 entoure la chambre de production de vapeur 120. A cet effet une paroi annulaire 124, mieux visible sur la figure 4, entoure la chambre de production de vapeur 120. L'entrée d'alimentation en eau 121 est formée dans la paroi annulaire 124.

La chambre de production de vapeur 120 comporte un dispositif de chauffe 150 pour transformer en vapeur l'eau présente dans la chambre de production de vapeur 120. Dans l'exemple de réalisation illustré sur les figures 2 à 4, le dispositif de chauffe 150 comprend un plot chauffant 151. A titre de variante, le dispositif de chauffe 150 peut notamment comporter un élément chauffant disposé sous une plaque de diffusion de chaleur et/ou dans une plaque de diffusion de chaleur formant au moins une partie du fond de la chambre de production de vapeur 120.

La chambre de production de vapeur 120 est reliée à au moins une sortie de distribution de vapeur 115 ménagée dans une partie inférieure 110 du générateur de vapeur 105. A cet effet, la chambre de production de vapeur 120 communique avec au moins une sortie d'évacuation de vapeur 122 disposée plus haut que l'entrée d'alimentation en eau 121. La chambre de production de vapeur 120 est confinée au dessus de la ou des sortie(s) d'évacuation de vapeur 122. La ou chaque sortie d'évacuation de vapeur 122 communique par un conduit 125 avec la ou l'une des sortie(s) de distribution de vapeur 115.

Plus particulièrement dans l'exemple de réalisation illustré sur les figures 2 à 4, la chambre de production de vapeur 120 communique avec la ou les sortie(s) d'évacuation de vapeur 122 par une chambre d'expansion de vapeur 170 disposée au dessus de la chambre de production de vapeur 120. En d'autres termes, ladite chambre d'expansion de vapeur est dépourvue de communication avec l'extérieur au dessus de ladite au moins une sortie d'évacuation de vapeur 122. Une paroi latérale séparatrice 180 est agencée entre l'orifice de remplissage 160 et la chambre d'expansion de vapeur 170 pour éviter les échappements de vapeur par l'orifice de remplissage 160. A cet effet, la paroi latérale séparatrice 180 s'étend plus bas que la ou les sorties(s) d'évacuation de vapeur 122. En d'autres termes, la paroi latérale séparatrice 180 s'étend en dessous de la ou des sortie(s) d'évacuation de vapeur 122. Plus particulièrement, la paroi latérale séparatrice 180 s'étend plus bas que l'entrée d'alimentation en eau 121. Tel que bien visible sur les figures 2 à 4, la paroi latérale séparatrice 180 s'étend dans le réservoir d'eau 106. En d'autres termes, l'eau peut atteindre les deux faces de la partie inférieure de la paroi latérale séparatrice 180.

Dans l'exemple de réalisation illustré sur les figures 2 à 4, la chambre de production de vapeur 120 présente plusieurs sorties d'évacuation de vapeur 122 disposées plus haut que l'entrée d'alimentation en eau 121 et communiquant par plusieurs conduits 125 avec les sorties de distribution de vapeur 115. Plus particulièrement, les conduits 125 sont ménagés dans la paroi annulaire 124. Deux groupes de trois conduits 125 sont disposés de part et d'autre du plot chauffant 151. Les conduits 125 sont verticaux. A titre de variante les conduits 125 peuvent être descendants sans nécessairement être verticaux. De préférence les conduits 125 sont dépourvus de chicanes. En d'autres termes, les conduits 125 sont descendants de manière continue, sans nécessairement être rectilignes.

Plus particulièrement, le générateur de vapeur 105 présente une surface d'appui annulaire inférieure 109 prévue pour reposer sur le récipient 102.

Le générateur de vapeur 105 présente une paroi inférieure 113 dans laquelle est/sont formée(s) la ou les sorties de distribution de vapeur 115. La chambre de production de vapeur 120 est agencée dans le générateur de vapeur 105 à distance de la paroi inférieure 113, ce qui permet une plus grande liberté dans la position des sorties de distribution de vapeur 115.

Le générateur de vapeur 105 présente au moins un évent 118 mettant en communication la partie inférieure 110 du générateur de vapeur 105 avec une partie extérieure 111 du générateur de vapeur 105 s'étendant au dessus de la partie inférieure 110. Ledit au moins un évent 118 est entouré par la surface d'appui annulaire inférieure 109.

Le générateur de vapeur 105 présente une paroi latérale extérieure 112. Le fond 108 du réservoir d'eau 106 relie la paroi latérale extérieure 112 à la paroi annulaire 124. La chambre de production de vapeur 120 est agencée dans le générateur de vapeur 105 à distance de la paroi latérale extérieure 112. Ledit au moins un évent 118 débouche dans la paroi latérale extérieure 112.

Dans l'exemple de réalisation illustré sur les figures 2 à 4, le générateur de vapeur 105 présente plusieurs évents 118 mettant en communication la partie inférieure 110 du générateur de vapeur 105 avec la partie extérieure 111 du générateur de vapeur 105. La partie inférieure 110 forme la paroi inférieure 113. La partie extérieure 111 forme la paroi latérale extérieure 112. Deux groupes de trois évents 118 sont disposés de part et d'autre du réservoir d'eau 106 entourant la chambre de production de vapeur 120.

L'accessoire cuiseur vapeur 104 présente une paroi supérieure 116 avantageusement réalisée en matière transparente ou translucide. La paroi supérieure 116 est assemblée avec la paroi latérale extérieure 112, par exemple par clipsage, par collage, par surmoulage, par vissage ou par soudage. La paroi supérieure 116 forme une partie du réservoir d'eau 106. La paroi latérale séparatrice 180 est issue de la paroi supérieure 116. La paroi supérieure 116 forme la partie supérieure de la chambre d'expansion de vapeur 170.

Le cuiseur vapeur électrique 101 illustré sur la figure 2 et l'accessoire cuiseur vapeur 104 illustré sur les figures 2 à 4 fonctionnent et s'utilisent de la manière suivante.

L'utilisateur dispose l'accessoire cuiseur vapeur 104 sur le récipient 102 après avoir disposé les aliments dans le récipient 102. L'utilisateur remplit le réservoir d'eau 106 par l'orifice de remplissage 160. L'eau s'écoule par l'entrée d'alimentation en eau 121 dans la chambre de production de vapeur 120. De préférence, l'utilisateur remplit le réservoir d'eau 106 jusqu'à un niveau suffisamment inférieur aux sorties d'évacuation de vapeur 122, pour éviter que l'eau atteigne les sorties d'évacuation de vapeur 122 et s'écoule par les conduits 125. L'utilisateur met alors en marche le dispositif de chauffe 150. La température de l'eau présente dans la chambre de production de vapeur 120 s'élève jusqu'à ce que de la vapeur soit produite. La vapeur s'élève depuis la chambre de production de vapeur 120 pour atteindre la chambre d'expansion de vapeur 170. La vapeur est alors confinée par la paroi supérieure 116, par la paroi latérale séparatrice 180 et par l'eau présente dans le réservoir d'eau 106. La vapeur s'échappe alors par les sorties d'évacuation de vapeur 122 pour atteindre les sorties de distribution de vapeur 115 en descendant par les conduits 125. La vapeur sortant des sorties de distribution de vapeur 115 se répand dans le récipient 102. L'air présent au dessus des aliments peut s'échapper par les évents 118. Lorsque les aliments sont saturés en vapeur, la vapeur s'échappe également par les évents 118.

Si désiré, la chambre de production de vapeur 120 peut comporter plusieurs dispositifs de chauffe.

Si désiré le générateur de vapeur 105 peut comporter un dispositif de support amovible par rapport à la chambre de production de vapeur 120, de sorte que la chambre de production de vapeur 120 repose sur ledit dispositif de support et que ledit dispositif de support présente au moins une portion de surface d'appui prévue pour reposer sur un récipient. Le dispositif de support peut notamment présenter une configuration annulaire ou une configuration en U. En alternative, le dispositif de support amovible peut notamment appartenir au couvercle 103.

La présente invention n'est nullement limitée aux exemples de réalisation décrits et à leurs variantes, mais englobe de nombreuses modifications dans le cadre des revendications.

## Revendications

1. Accessoire cuiseur vapeur (4 ; 104) pour chauffer et/ou cuire à la vapeur des aliments contenus dans un récipient (2 ; 102), l'accessoire cuiseur vapeur (4 ; 104) comprenant un générateur de vapeur (5 ; 105) comportant une chambre de production de vapeur (20 ; 120), l'accessoire cuiseur vapeur (4 ; 104) comprenant un réservoir d'eau (6 ; 106) alimentant en eau la chambre de production de vapeur (20 ; 120), la chambre de production de vapeur (20 ; 120) étant reliée à au moins une sortie de distribution de vapeur (15 ; 115) ménagée dans une partie inférieure (10 ; 110) du générateur de vapeur (5 ; 105), **caractérisé en ce que** le générateur de vapeur (5 ; 105) présente au moins un évent (18 ; 118) mettant en communication la partie inférieure (10 ; 110) du générateur de vapeur (5 ; 105) avec une partie extérieure (11 ; 111) du générateur de vapeur (5 ; 105) s'étendant au dessus de la partie inférieure (10 ; 110).

2. Accessoire cuiseur vapeur (4 ; 104) selon la revendication 1, **caractérisé en ce que** le générateur de vapeur (5 ; 105) présente une surface d'appui annulaire inférieure (9 ; 109).

3. Accessoire cuiseur vapeur (4 ; 104) selon la revendication 2, **caractérisé en ce que** ledit au moins un évent (18 ; 118) est entouré par la surface d'appui annulaire inférieure (9 ; 109).

4. Accessoire cuiseur vapeur (4 ; 104) selon l'une des revendications 1 à 3, **caractérisé en ce que** le générateur de vapeur (5 ; 105) présente une paroi latérale extérieure (12 ; 112) et **en ce que** la chambre de production de vapeur (20 ; 120) est agencée dans le générateur de vapeur (5 ; 105) à distance de la paroi latérale extérieure (12 ; 112).

5. Accessoire cuiseur vapeur (4 ; 104) selon la revendication 4, **caractérisé en ce que** ledit au moins un évent (18 ; 118) débouche dans la paroi latérale extérieure (12; 112).

6. Accessoire cuiseur vapeur (4 ; 104) selon l'une des revendications 4 ou 5, **caractérisé en ce que** ledit au moins un évent (18 ; 118) débouche dans la paroi latérale extérieure (12 ; 112) en dessous du réservoir d'eau (6 ; 106).

7. Accessoire cuiseur vapeur (104) selon l'une des revendications 1 à 6, **caractérisé en ce que** le réservoir d'eau (106) entoure la chambre de production de vapeur (120).

8. Accessoire cuiseur vapeur (104) selon la revendication 7, **caractérisé en ce que** le réservoir d'eau (106) communique par une entrée d'alimentation en eau (121) avec la chambre de production de vapeur (120), **en ce qu'**une paroi annulaire (124) entoure la chambre de production de vapeur (120), et **en ce que** l'entrée d'alimentation en eau (121) est formée dans la paroi annulaire (124).

9. Accessoire cuiseur vapeur (104) selon la revendication 8, **caractérisé en ce que** le générateur de vapeur (105) présente une paroi latérale extérieure (112) et **en ce qu'**un fond (108) du réservoir d'eau (106) relie la paroi latérale extérieure (112) à la paroi annulaire (124).

10. Accessoire cuiseur vapeur (4 ; 104) selon l'une des revendications 1 à 9, **caractérisé en ce que** le générateur de vapeur (5 ; 105) présente une paroi inférieure (13 ; 113) dans laquelle est formée ladite au moins une sortie de distribution de vapeur (15 ; 115) et **en ce que** la chambre de production de vapeur (20 ; 120) est agencée dans le générateur de vapeur (5 ; 105) à distance de la paroi inférieure (13 ; 113).

11. Accessoire cuiseur vapeur (4 ; 104) selon la revendication 10, **caractérisé en ce que** ledit au moins un évent (18 ; 118) débouche dans la paroi inférieure (13 ; 113).

12. Cuiseur vapeur électrique (1 ; 101), comportant un récipient (2 ; 102) pour contenir les aliments à chauffer et/ou à cuire, et un couvercle (3; 103) présentant une face inférieure (7; 107) prévue pour être disposée sur le récipient (2 ; 102), **caractérisé en ce que** le couvercle (3 ; 103) comprend un accessoire cuiseur vapeur (4 ; 104) selon l'une des revendications 1 à 11.

## Patentansprüche

1. Dampfgarerzubehör (4; 104) zum Dampferhitzen und/oder -garen der Lebensmittel, die in einem Behälter (2; 102) enthalten sind, wobei das Dampfgarerzubehör (4; 104) einen Dampferzeuger (5; 105) umfasst, der eine Dampfproduktionskammer (20 ; 120) umfasst, wobei das Dampfgarerzubehör (4; 104) einen Wassertank (6; 106) umfasst, der die Dampfproduktionskammer (20; 120) mit Wasser versorgt, wobei die Dampfproduktionskammer (20; 120) mit mindestens einem Dampfverteilerausgang (15; 115) verbunden ist, der in einem unteren Teil (10 ; 110) des Dampferzeugers (5 ; 105) ausgestaltet ist, **dadurch gekennzeichnet, dass** der Dampferzeuger (5; 105) mindestens eine Entlüftung (18; 118) aufweist, die den unteren Teil (10 ; 110) des Dampferzeugers (5; 105) mit einem äußeren Teil (11; 111) des Dampferzeugers (5; 105), welcher sich über dem unteren Teil (10 ; 110) erstreckt, in Kommunikation bringt.

2. Dampfgarerzubehör (4; 104) nach Anspruch 1, **dadurch gekennzeichnet, dass** der Dampferzeuger (5; 105) eine untere ringförmige Auflagefläche (9; 109) aufweist.

3. Dampfgarerzubehör (4; 104) nach Anspruch 2, **dadurch gekennzeichnet, dass** die mindestens eine Entlüftung (18; 118) von der unteren ringförmigen Auflagefläche (9; 109) umgeben ist.

4. Dampfgarerzubehör (4; 104) nach einem der Ansprüche 1 bis 3, **dadurch gekennzeichnet, dass** der Dampferzeuger (5 ; 105) eine seitliche Außenwand (12; 112) aufweist, und dadurch, dass die Dampfproduktionskammer (20 ; 120) im Dampferzeuger (5; 105) in Abstand zur seitlichen Außenwand (12; 112) eingerichtet ist.

5. Dampfgarerzubehör (4; 104) nach Anspruch 4, **dadurch gekennzeichnet, dass** die mindestens eine Entlüftung (18; 118) in der seitlichen Außenwand (12; 112) mündet.

6. Dampfgarerzubehör (4 ; 104) nach einem der Ansprüche 4 oder 5, **dadurch gekennzeichnet, dass** die mindestens eine Entlüftung (18; 118) in der seitlichen Außenwand (12; 112) unter dem Wassertank (6; 106) mündet.

7. Dampfgarerzubehör (104) nach einem der Ansprüche 1 bis 6, **dadurch gekennzeichnet, dass** der Wassertank (106) die Dampfproduktionskammer (120) umgibt.

8. Dampfgarerzubehör (104) nach Anspruch 7, **dadurch gekennzeichnet, dass** der Wassertank (106) über einen Wasserversorgungseingang (121) mit der Dampfproduktionskammer (120) kommuniziert, dadurch, dass eine ringförmige Wand (124) die Dampfproduktionskammer (120) umgibt, und dadurch, dass der Wasserversorgungseingang (121) in der ringförmigen Wand (124) gebildet ist.

9. Dampfgarerzubehör (104) nach Anspruch 8, **dadurch gekennzeichnet, dass** der Dampferzeuger (105) eine seitliche Außenwand (112) aufweist, und dadurch, dass ein Boden (108) des Wassertanks (106) die seitliche Außenwand (112) mit der ringförmigen Wand (124) verbindet.

10. Dampfgarerzubehör (4; 104) nach einem der Ansprüche 1 bis 9, **dadurch gekennzeichnet, dass** der Dampferzeuger (5; 105) eine untere Wand (13; 113) aufweist, in der der mindestens eine Dampfverteilerausgang (15; 115) gebildet ist, und dadurch, dass die Dampfproduktionskammer (20 ; 120) im Dampferzeuger (5; 105) in Abstand zur unteren Wand (13; 113) eingerichtet ist.

11. Dampfgarerzubehör (4; 104) nach Anspruch 10, **dadurch gekennzeichnet, dass** die mindestens eine Entlüftung (18; 118) in der unteren Wand (13; 113) mündet.

12. Elektrischer Dampfgarer (1; 101), der einen Behälter (2; 102), um die zu erhitzenden und/oder zu garenden Lebensmittel zu enthalten, und einen Deckel (3; 103), der eine Unterseite (7 ; 107) aufweist, die dafür vorgesehen ist, auf dem Behälter (2 ; 102) angeordnet zu werden, umfasst, **dadurch gekennzeichnet, dass** der Deckel (3; 103) ein Dampfgarerzubehör (4; 104) nach einem der Ansprüche 1 bis 11 umfasst.

## Claims

1. Steam cooker accessory (4; 104) to heat and/or cook with steam, food contained in a container (2; 102), the steam cooker accessory (4; 104) comprising a steam generator (5; 105) comprising a steam production chamber (20 ; 120), the steam cooker accessory (4; 104) comprising a water tank (6; 106) supplying the steam production chamber (20; 120) with water, the steam production chamber (20; 120) being connected to at least one steam dispensing outlet (15; 115) arranged in a lower portion (10; 110) of the steam generator (5; 105), **characterised in that** the steam generator (5; 105) has at least one vent (18; 118) putting in communication the lower portion (10; 110) of the steam generator (5; 105) with an outer portion (11; 111) of the steam generator (5; 105) extending above the lower portion (10; 110).

2. Steam cooker accessory (4; 104) according to claim 1, **characterised in that** the steam generator (5; 105) has a lower annular supporting surface (9; 109).

3. Steam cooker accessory (4; 104) according to claim 2, **characterised in that** said at least one vent (18; 118) is surrounded by the lower annular supporting surface (9; 109).

4. Steam cooker accessory (4; 104) according to one of claims 1 to 3, **characterised in that** the steam generator (5; 105) has an outer side wall (12; 112) and **in that** the steam production chamber (20; 120) is arranged in the steam generator (5; 105) at a distance from the outer side wall (12; 112).

5. Steam cooker accessory (4; 104) according to claim 4, **characterised in that** said at least one vent (18; 118) opens into the outer side wall (12; 112).

6. Steam cooker accessory (4; 104) according to one of claims 4 or 5, **characterised in that** said at least one vent (18; 118) opens into the outer side wall (12; 112) below the water tank (6; 106).

7. Steam cooker accessory (104) according to one of claims 1 to 6, **characterised in that** the water tank (106) surrounds the steam production chamber (120).

8. Steam cooker accessory (104) according to claim 7, **characterised in that** the water tank (106) communicates by a water supply inlet (121) with the steam production chamber (120), **in that** an annular wall (124) surrounds the steam production chamber (120), and **in that** the water supply inlet (121) is formed in the annular wall (124).

9. Steam cooker accessory (104) according to claim 8, **characterised in that** the steam generator (105) has an outer side wall (112) and **in that** a bottom (108) of the water tank (106) connects the outer side wall (112) to the annular wall (124).

10. Steam cooker accessory (4; 104) according to one of claims 1 to 9, **characterised in that** the steam generator (5; 105) has a lower wall (13; 113) wherein is formed said at least one steam dispensing outlet (15; 115) and **in that** the steam production chamber (20; 120) is arranged in the steam generator (5; 105) at a distance from the lower wall (13; 113).

11. Steam cooker accessory (4; 104) according to claim 10, **characterised in that** said at least one vent (18; 118) opens into the lower wall (13; 113).

12. Electrical steam cooker (1; 101), comprising a container (2; 102) to contain food to be heated and/or cooked, and a cover (3; 103) having a lower face (7; 107) provided to be arranged on the container (2; 102), **characterised in that** the cover (3; 103) comprises a steam cooker accessory (4; 104) according to one of claims 1 to 11.
